Europäisches Patentamt

European Patent Office

Office européen des brevets

(19)

(11) EP 0 870 746 B1

## (12) FASCICULE DE BREVET EUROPEEN

(45) Date de publication et mention
de la délivrance du brevet:
**25.08.2004 Bulletin 2004/35**

(51) Int Cl.$^7$: **C06D 5/06**, B60R 21/26

(21) Numéro de dépôt: **98400825.0**

(22) Date de dépôt: **07.04.1998**

(54) **Procédé pour assurer un déploiement progressif d'un coussin de protection et chargement pyrotechnique pour sa mise en oeuvre**

Verfahren zur Sicherung einer progressiven Entfaltung eines Airbags und pyrotechnische Ladung zur Verwendung in einem solchen Verfahren

Process for assuring the progressive deployment of an airbag and pyrotechnic charge for use in such a process

(84) Etats contractants désignés:
**DE ES FR GB IT SE**

(30) Priorité: **11.04.1997 FR 9704464**

(43) Date de publication de la demande:
**14.10.1998 Bulletin 1998/42**

(73) Titulaire: **Livbag S.N.C.**
**75017 Paris (FR)**

(72) Inventeurs:
• **Marsaud, Benoît**
**27830 Neaufles Saint Martin (FR)**
• **Perotto, Christian**
**91610 Ballancourt (FR)**

• **Delwarde, Jean-Charles**
**91760 Itteville (FR)**
• **Duvacquier, Daniel**
**33300 Bordeaux (FR)**

(74) Mandataire: **Le Faou, Daniel et al**
**Cabinet Regimbeau**
**Espace Performance**
**Bâtiment K**
**35769 Saint-Gregoire-Cedex (FR)**

(56) Documents cités:
**EP-A- 0 591 119          EP-A- 0 767 155**
**DE-A- 4 318 883          DE-C- 3 933 555**
**US-A- 5 160 163**

**Description**

La présente invention se rapporte au domaine de la protection, en cas de choc, des occupants d'un véhicule automobile au moyen d'un coussin gonflé par un générateur pyrotechnique de gaz. Plus précisément l'invention concerne un procédé de fabrication d'un dispositif pour assurer un déploiement progressif du coussin de protection. L'invention concerne également un chargement pyrotechnique utilisé dans la mise en oeuvre du procédé selon l'invention.

Il est connu d'assurer, en cas de collision d'un véhicule automobile, la protection des occupants de ce véhicule au moyen de coussins qui sont gonflés par les gaz provenant d'un générateur pyrotechnique. Les gaz servant à gonfler le coussin peuvent provenir en totalité de la combustion d'un chargement pyrotechnique ou résulter du mélange des gaz provenant de la combustion d'un chargement pyrotechnique avec des gaz stockés dans une enceinte sous pression comme cela est le cas pour les générateurs de gaz dits "hybrides". Comme compositions pyrotechniques génératrices de gaz l'homme de métier peut utiliser des compositions minérales à base d'azoture de sodium comme celles décrites, par exemple, dans le brevet français FR-B-2649478 ou dans son correspondant américain US-A-5,139,280. L'homme de métier peut également utiliser des compositions voisines des poudres propulsives pour armes, à simple base à la nitrocellulose, à double base à la nitrocellulose et à la nitroglycérine ou encore des poudres dites "composites" à base d'un liant organique et d'une charge oxydante comme cela est par exemple décrit dans le brevet français FR-B-262322 ou dans son correspondant américain US-A-5,160,163.

Les coussins de protection pour occupants d'un véhicule automobile doivent pouvoir être déployés dans des délais extrêmement courts, de l'ordre de 30 à 40 ms, et nécessitent pour ce faire l'emploi de chargements pyrotechniques ayant des vitesses de combustion très élevées. L'emploi de tels chargements pose cependant un nouveau problème car un déploiement trop brutal du coussin dans les premières millisecondes de fonctionnement peut causer des blessures graves à l'occupant du véhicule que le coussin est supposé protéger. Il est donc nécessaire de disposer d'un chargement possédant une vitesse globale de combustion compatible avec les exigences de la sécurité automobile mais présentant une loi de combustion progressive. L'homme de métier dira que, lors d'un tir en enceinte fermée, la courbe représentant la pression dans l'enceinte en fonction du temps a, pour un tel chargement, une allure générale de "S".

Ce type de considération écarte totalement l'emploi de chargements pyrotechniques recouverts totalement ou partiellement par une couche de composition vive sensible à l'allumage encore connue sous l'appellation anglo-saxonne de "ignition enhancer coating". Ces chargement qui sont, par exemple, décrits dans le brevet US-A-4,246,051 ont un développement initial de pression incompatible avec la progressivité recherchée.

Pour obtenir un déploiement progressif du coussin de protection, l'homme de métier a exploré plusieurs types de solution.

L'homme de métier a cherché fabriquer des chargements comportant plusieurs couches possédant des épaisseurs et des vitesses de combustion différentes. Le brevets US-A-5,507,890 décrit ainsi de tels chargements à base d'azoture de sodium et réalisés par compression. Néanmoins la technique ainsi décrite est limitée dans ses possibilités d'application aux compositions à base d'azoture de sodium, compositions qui, par ailleurs, sont de plus en plus délaissées en raison des problèmes de toxicité et de sécurité liés à ce type de compositions.

L'homme de métier a également cherché à obtenir des chargements progressifs en enrobant des chargements à base de compositions présentant une vitesse de combustion élevée par une pellicule inhibitrice à base de résine ou de produits minéraux inertes comme cela est par exemple décrit dans les demandes de brevet EP-A-0 586 045 et EP-A-0 586 060. Ces solutions ne sont cependant pas satisfaisantes au plan de la non-toxicité et de la propreté des gaz ainsi générés.

L'homme de métier a alors cherché à obtenir une émission progressive des gaz en utilisant des générateurs à chambres de combustion coaxiales multiples et contenant chacune un chargement pyrotechnique différent. Cette solution, par exemple décrit dans le brevet US-A-5,529,335 qui concerne plus particulièrement un générateur pour rétracteur de ceinture de sécurité, implique une structure complexe du générateur et donc un coût élevé de ce dernier.

L'homme de métier ne dispose pas à l'heure actuelle d'une solution simple et économique pour assurer un gonflement progressif, dans les conditions de temps imparties par les exigences de la sécurité automobile, d'un coussin de protection.

L'objet de la présente invention est précisément d'apporter une solution à ce problème.

L'invention concerne donc un procédé de fabrication d'un dispositif permettant de gonfler de manière progressive un coussin (1) de protection pour occupant d'un véhicule automobile, ce dispositif étant constitué principalement par ledit coussin communiquant avec un générateur (2) pyrotechnique de gaz qui proviennent au moins partiellement de la combustion d'un chargement pyrotechnique (9) solide à double composition disposé à l'intérieur dudit générateur et qui peut être initié en combustion par un allumeur (8) couplé à un détecteur de collision, caractérisé en ce que:

     i) on utilise un chargement pyrotechnique solide (9) constitué par un chargement pyrotechnique principal (23) présentant une vitesse de combustion linéaire $V_1$ au moins égale à 25 mm/s sous une pression de 20 MPa et dont on recouvre la surface, au moins partiellement, par pulvérisation ou par trempage, d'une pellicule externe (24) de composition pyrotechnique adhérant au dit chargement principal par simple dépôt, cette pellicule présentant une vitesse de combustion linéaire $V_2$ satisfaisant sous une pression de 20 MPa à la relation :

$$0,05 \; V_1 \leq V_2 \leq 0,5 \; V_1$$

ledit chargement pyrotechnique principal (23) et ladite pellicule externe (24) de composition pyrotechnique étant constitués de compositions pyrotechniques à base de nitrocellulose ou de compositions pyrotechniques composites principalement constituées par un liant et par une charge énergétique,
ii) on dispose ledit chargement à double composition à l'intérieur dudit générateur de manière à ce que la totalité de la surface du chargement principal ainsi recouverte serve de surface d'initiation en combustion de ce dernier lorsque ledit allumeur est actionné par le détecteur de collision.

Le procédé selon l'invention concerne ainsi aussi bien les dispositifs de protection dans lesquels la totalité des gaz servant à gonfler le coussin de protection proviennent de la combustion d'un chargement pyrotechnique solide, que ceux dans lesquels les gaz qui servent à gonfler le coussin de protection proviennent en partie seulement de la combustion d'un chargement pyrotechnique solide, l'autre partie provenant soit d'une réserve de gaz sous pression comme cela est le cas pour les générateurs dits "hybrides", soit même de l'extérieur comme cela est le cas pour les systèmes à trompes.

Selon une première caractéristique essentielle de l'invention on utilise un chargement pyrotechnique solide à double composition qui est constitué à partir d'un chargement pyrotechnique générateur de gaz principal présentant une vitesse de combustion linéaire V1 au moins égale à 25mm/s et préférentiellement voisine de 40mm/s sous une pression de fonctionnement de 20 MPa pour pouvoir répondre aux exigences de la sécurité automobile. Ce chargement principal peut être sous forme de pastilles mais sera avantageusement sous forme d'un bloc annulaire de révolution présentant au moins un canal central permettant de le positionner autour de l'allumeur. Ce bloc comprendra également de manière préférée au moins un canal périphérique et, généralement, une pluralité de canaux périphériques.

La surface de ce chargement principal doit au moins partiellement être recouverte par une pellicule externe de composition pyrotechnique génératrice de gaz dont la vitesse de combustion sera inférieure à la vitesse de combustion du chargement principal mais qui ne sera pas nulle. Les compositions inhibitrices qui se dégradent à la chaleur mais qui n'ont pas de vitesse de combustion propre sont donc expressément exclues du champs de la présente invention. Dans la pratique on choisira, pour constituer cette pellicule, une composition pyrotechnique présentant une vitesse de combustion linéaire $V_2$ qui satisfasse, dans les mêmes conditions de pression, à la relation :

$$0,05 \; V_1 \leq V_2 \leq 0,5 \; V_1$$

et de manière préférée :

$$0,1 \; V_1 \leq V_2 \leq 0,5 \; V_1$$

Cette pellicule externe de composition pyrotechnique doit adhérer parfaitement au chargement principal sans discontinuité pyrotechnique et notamment sans emploi de colle. Cette pellicule doit donc adhérer au chargement principal par simple dépôt. Pour cette raison la pellicule externe et le chargement principal seront le plus souvent de même nature.

Selon une première variante de réalisation de l'invention on utilisera pour constituer le dit chargement pyrotechnique principal et la dite pellicule externe des compositions pyrotechniques à base de nitrocellulose. Ces compositions se prêtent en effet bien à la préparation de laques pouvant être déposées par trempage ou pulvérisation en couches minces sur le chargement principal pour constituer, après évaporation du solvant, une pellicule adhérant parfaitement au dit chargement principal. On pourra avantageusement incorporer à la dite laque des plastifiants énergétiques ou non énergétiques. Une solution particulièrement préférée dans ce cadre consiste à utiliser un chargement pyrotechnique principal constitué par de la poudre à double base à la nitrocellulose et à la nitroglycérine ; ce chargement principal étant recouvert par une pellicule de poudre à simple base à la nitrocellulose. Mais, pour des raisons de stabilité dans le temps, selon une seconde variante préférée de l'invention on utilisera pour constituer le dit chargement pyrotechnique principal et la dite pellicules externes des compositions pyrotechniques composites principalement constituées par un liant et une charge énergétique, comme, par exemple, les compositions connues sous l'appellation anglo-saxonne "LOVA".

Selon le type de liant on pourra déposer, par trempage ou pulvérisation, sur le chargement principal la couche de composition destinée à constituer la pellicule externe soit sous forme de solution dans un solvant volatil soit sous forme de pâte composite dont le liant est non polymérisé, sa polymérisation se faisant après dépôt sur le chargement principal. Pour améliorer l'adhésion de la pellicule pyrotechnique sur le chargement principal on utilisera avantageusement pour constituer le dit chargement principal et la dite pellicule pyrotechnique des compositions composites qui contiennent le même liant.

Comme compositions pyrotechniques particulièrement préférées dans le cadre de la présente invention on peut citer les compositions décrites dans la demande de brevet français FR-A-2 728 562 ou dans son correspondant américain US-A-5,610,444 ou encore celles décrites dans la demande de brevet français 96.08050.

Selon une réalisation préférée de l'invention on utilisera un chargement pyrotechnique principal en forme de bloc annulaire dont seule la surface latérale externe est recouverte par une pellicule pyrotechnique de vitesse de combustion $V_2$.

Selon une seconde caractéristique de l'invention on dispose le dit chargement à double composition à l'intérieur du dit générateur de manière à ce que au moins la totalité de la surface du chargement principal ainsi recouverte serve de surface d'initiation en combustion de ce dernier lorsque le dit allumeur est actionné. Il est en effet essentiel dans le cadre de l'invention que la pellicule externe de composition pyrotechnique lente participe toute entière à l'initiation en combustion du chargement et pour cela que la totalité de cette pellicule puisse être atteinte par les gaz chauds provenant de l'allumeur. Cela implique notamment lorsque le chargement à double composition est sous forme de bloc annulaire que ce bloc ait des dimensions inférieures à celles de la chambre de combustion du générateur et qu'il soit calé, à l'intérieur de cette chambre, par des moyens de calage perméables aux gaz d'allumage. Pour ce faire on utilisera avantageusement un générateur pyrotechnique constitué par un corps cylindrique creux en forme de boîtier, comprenant une paroi latérale et une face plane, et qui est fermé par une bague de fermeture traversée par un dispositif d'allumage central qui pénètre à l'intérieur du dit boîtier et qui entouré par une chargement pyrotechnique en forme de bloc annulaire maintenu par des systèmes de calage perméables aux gaz, comme par exemple des grilles et des ressorts, la paroi latérale du dit générateur présentant par ailleurs des orifices de sortie des gaz qui sont obturés, avant fonctionnement, par une enveloppe métallique fine en cuivre interne au dit générateur.

Si le chargement principal comporte des zones non recouvertes par la dite pellicule pyrotechnique, ces zones pourront, selon le cas, participer ou non à l'initiation en combustion du chargement pyrotechnique.

L'invention concerne également les chargements pyrotechniques à double composition permettant la mise en oeuvre du procédé qui vient d'être décrit. Ces chargements sont constitués à partir d'un chargement principal enrobé ayant une vitesse de combustion linéaire au moins égale à 25 mm/s sous une pression de 20 MPa et sont caractérisés en ce que au moins une partie de la surface du dit chargement principal est recouverte par une pellicule de composition pyrotechnique adhérant au dit chargement principal par simple dépôt et présentant une vitesse de combustion linéaire $V_2$ satisfaisant sous une pression de 20MPa à la relation :

$$0,05 \ V_1 \leq V_2 \leq 0,5 \ V_1.$$

Comme déjà indiqué plus haut, la vitesse de combustion linéaire $V_2$ satisfaira préférentiellement à la relation :

$$0,1 \ V_1 \leq V_2 \leq 0,5 \ V_1$$

Cette pellicule pourra recouvrir la totalité de la surface du chargement principal y compris la surface des canaux dans le cas d'un bloc annulaire multiperforé ou seulement une partie, par exemple, uniquement la surface externe dans le cas d'un chargement principal en forme de bloc annulaire. Comme il va maintenant être expliqué en détails la combustion de cette pellicule doit correspondre aux toutes premières millisecondes de la combustion du chargement bi-composition complet. Cette pellicule contiendra donc peu de matière pyrotechnique et son épaisseur sera très faible, le plus souvent inférieure ou égale à 0,1mm et préférentiellement de l'ordre de quelques centièmes de millimètre. Dans la pratique on cherchera à régler l'épaisseur de cette pellicule de manière à ce que son temps de combustion soit au plus égal au quart du temps de combustion du chargement principal.

Ainsi, en cas de collision du véhicule, le détecteur de collision envoie un signal électrique à l'allumeur qui est mis à feu et envoie des gaz chauds sur au moins toute la surface du chargement bi-composition recouverte par la pellicule de composition pyrotechnique à vitesse de combustion réduite. Il s'en suit un dégagement gazeux modéré qui amorce le déploiement du coussin de protection. L'épaisseur de cette pellicule étant très faible, comme indiqué ci-dessus, au bout de quelques millisecondes la pellicule a achevé sa combustion propre et a transmis l'inflammation aux surfaces du chargement principal non encore initiées. La combustion se poursuit alors sur toute la surface du chargement principal avec une vitesse élevée et un fort débit gazeux qui poursuit et achève le déploiement du coussin de protection dans les délais exigés par la sécurité automobile. L'invention offre ainsi à l'homme de métier la possibilité de procéder à un déploiement progressif du coussin de protection à partir de générateurs traditionnels et sans augmentation sensible des coûts de fabrication, l'obtention d'un chargement pyrotechnique bi-composition par trempage ou pulvérisation pouvant être facilement automatisée.

On décrit ci-après un exemple de mise en oeuvre de l'invention selon un mode préféré de réalisation en se référant aux figures 1 à 4.

La figure **1** représente, en vue partiellement coupée, un dispositif permettant la mise en oeuvre du procédé selon l'invention.

La figure **2** représente, vu en perspective, un chargement bi-composition utilisé dans le cadre de l'invention.

La figure **3** représente, vu en coupe selon un plan de symétrie axiale, le chargement représenté à la figure 2.

La figure **4** représente des courbes de pression pour un dispositif selon l'invention en fonctionnement.

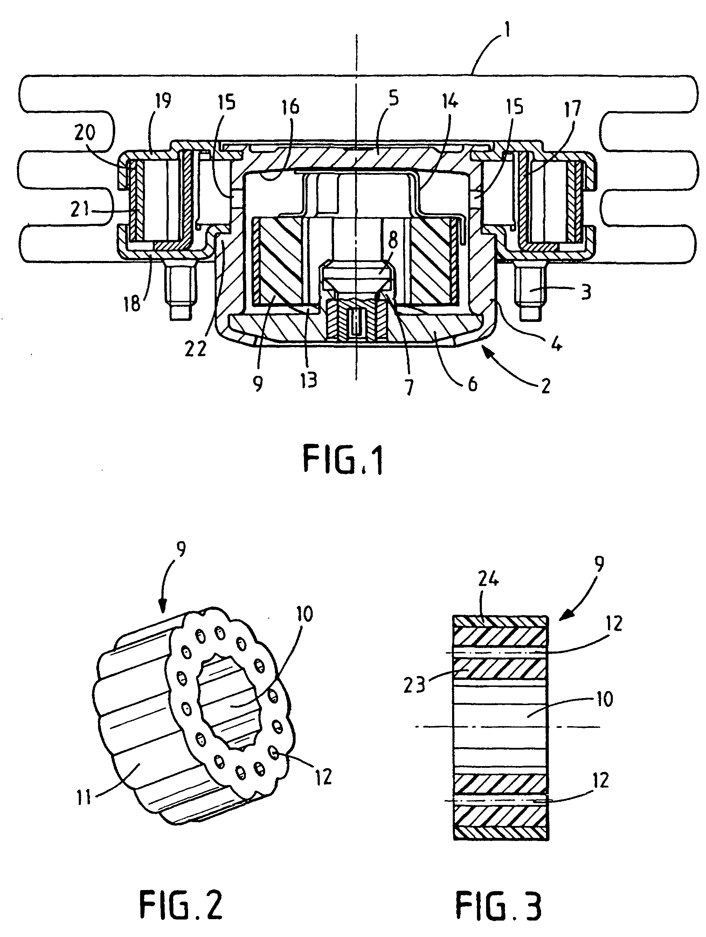

On a représenté à la figure 1 un dispositif de protection pour occupant d'un véhicule automobile constitué par un coussin gonflable 1 fixé à un générateur pyrotechnique 2 de gaz par des vis 3 servant également à fixer le dispositif au véhicule.

Le générateur 2 constitué par un corps cylindrique creux en forme de boîtier comprenant une paroi latérale 4 et une paroi plane 5 d'un seul tenant. Ce boîtier est fermé par une bague de fermeture 6 sertie dans l'extrémité libre du boîtier constituant le corps du générateur. La bague de fermeture 6 présente un orifice central bordé par un col 7 pénétrant dans le générateur 2. Un allumeur électrique 8 est serti dans le col 7 et est couplé par une liaison électrique à un détecteur de collision non représenté sur la figure. Un chargement pyrotechnique 9 en forme de bloc annulaire est disposé à l'intérieur du générateur autour de l'allumeur 8. En se reportant plus particulièrement à la figure 2 on observe que ce bloc annulaire a la forme d'une couronne lobée présentant un canal central 10 de grand diamètre, chaque lobe 11 comportant un canal 12 de petit diamètre. Le chargement 9 a des dimensions inférieures à celle du volume intérieur du générateur 2 et est calé par des assemblages 13 et 14 perméables aux gaz provenant de l'allumeur 8.

La paroi latérale 4 du corps du générateur 2 comporte des orifices 15 de sortie des gaz disposés à proximité de la paroi plane 5. Ces orifices 15 sont operculés par un boîtier interne 16 en cuivre très fin dont l'extrémité libres est pincée entre la bague de fermeture 6 et la paroi latérale 4.

Ces orifices 15 sont disposés en regard d'un déflecteur ajouré 17 porté et calé par une bague annulaire externe 18 et par un diffuseur annulaire 19. La bague annulaire externe 18 repose sur un méplat externe 22 présenté par la paroi latérale 4 tandis que le diffuseur 19 est serti dans le rebord de la paroi plane 5. des grilles de filtration 20 et 21 également coincées entre la bague externe 18 et le diffuseur 19 complètent le dispositif de sortie des gaz qui se trouve à l'intérieur du coussin gonflable 1.

En se reportant maintenant plus particulièrement à la figure 3 on observe que le chargement pyrotechnique 9 se compose d'un chargement principal 23 ayant la géométrie décrite plus haut et dont la surface latérale externe est recouverte par une pellicule externe 24 dont l'épaisseur a été exagérée pour des questions de clarté de la figure 3, comme cela est également le cas pour la figure 1.

Le chargement principal 23 est un chargement composite constitué essentiellement par un liant silicone et par une charge oxydante qui est un mélange, perchlorate d'ammonium/nitrate de sodium, selon la technique décrite dans le brevet FR 2 728 562. La teneur en charge oxydante dans ce chargement principal 23 était de 80 parties en poids. La pellicule externe 24 est constituée par une composition pyrotechnique de même nature dans laquelle la teneur en charge oxydante était de 40 parties en poids seulement. Cette pellicule 24 a été déposée sur le chargement principal 23 par pulvérisation avant réticulation complète du liant silicone. L'épaisseur de la pellicule 24 était inférieure à 0,1mm (un dixième de mm) et sa vitesse linéaire de combustion $V_2$ à 20 MPa était de l'ordre de 4mm/s pour une vitesse linéaire de combustion $V_1$ à 20MPa de 40mm/s pour le chargement principal 23.

Le fonctionnement de ce générateur est le suivant. En cas d'accident, le détecteur de collision, non représenté sur les figures, envoie un signal électrique qui met à feu l'allumeur 8 qui envoie des gaz chauds initier le chargement 9 en combustion par toutes ses surfaces accessibles. Il faut observer que les surfaces planes de ce chargement, ainsi que les surfaces internes du canal central 10 et des canaux périphériques 12 brûlent tout de suite avec la vitesse élevée V1 tandis que la surface latérale du chargement 9 commence à brûler avec la vitesse modérée $V_2$ pour ne brûler avec la vitesse élevée $V_1$ que lorsque l'épaisseur de la pellicule 24 a été brûlée.

Lorsque la pression interne au générateur atteint une valeur suffisante prédéterminée, les opercules constitués par les parties du boîtier 16 situées en regard des orifices 15 claquent et les gaz de combustion, répartis par le déflecteur ajouré 17, traversent les grilles de filtration 20 et 21 avant de venir gonfler le coussin 1. Il faut observer que dans le cadre de la présente invention les opercules doivent claquer avant que la pellicule 24 ait fini de brûler.

Il a été observé avec surprise que l'emploi d'un boîtier interne 16 en cuivre fin permet d'obtenir des gaz plus propres et moins toxiques que ceux obtenus avec un boîtier interne traditionnel en aluminium fin.

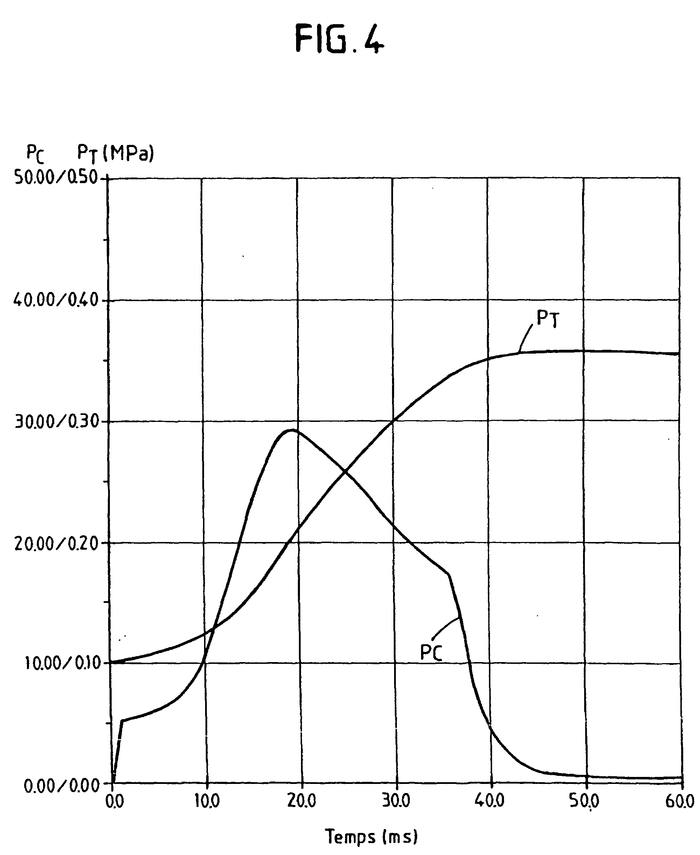

A titre d'exemple on a fait fonctionner un générateur pyrotechnique identique à celui qui vient d'être décrit dans une enceinte étanche de 60 litres représentant le volume offert par un coussin de protection. A l'aide de capteurs de pression on a mesuré d'une part la pression Pc interne au générateur et d'autre part la pression Pt dans l'enceinte étanche. La figure 4 représente les courbes Pc et Pt, en fonction du temps, ainsi obtenues. La courbe Pt illustre bien la progressivité de la montée en pression dans l'enceinte étanche.

**Revendications**

1. Procédé de fabrication d'un dispositif permettant de gonfler de manière progressive un coussin (1) de protection pour occupant d'un véhicule automobile, ce dispositif étant constitué principalement par ledit coussin communiquant avec un générateur (2) pyrotechnique de gaz qui proviennent au moins partiellement de la combustion d'un chargement pyrotechnique (9) solide à double composition disposé à l'intérieur dudit générateur et qui peut être initié en combustion par un allumeur (8) couplé à un détecteur de collision, **caractérisé en ce que** :

   i) on utilise un chargement pyrotechnique solide (9) constitué par un chargement pyrotechnique principal (23) présentant une vitesse de combustion linéaire $V_1$ au moins égale à 25 mm/s sous une pression de 20 MPa et dont on recouvre la surface, au moins partiellement, par pulvérisation ou par trempage, d'une pellicule externe (24) de composition pyrotechnique adhérant au dit chargement principal par simple dépôt, cette pellicule présentant une vitesse de combustion linéaire V2 satisfaisant sous une pression de 20 MPa à la relation :

   $$0{,}05\ V_1 \leq V_2 \leq 0{,}5\ V_1$$

   ledit chargement pyrotechnique principal (23) et ladite pellicule externe (24) de composition pyrotechnique étant constitués de compositions pyrotechniques à base de nitrocellulose ou de compositions pyrotechniques composites principalement constituées par un liant et par une charge énergétique,
   ii) on dispose ledit chargement à double composition à l'intérieur dudit générateur de manière à ce que la totalité de la surface du chargement principal ainsi recouverte serve de surface d'initiation en combustion de ce dernier lorsque ledit allumeur est actionné par le détecteur de collision.

2. Procédé selon la revendication 1, **caractérisé en ce que** le chargement pyrotechnique principal (23) est sous forme d'un bloc annulaire présentant au moins un canal central (10).

3. Procédé selon la revendication 1, **caractérisé en ce que** l'épaisseur de la pellicule externe (24) est réglée de manière à ce que son temps de combustion soit au plus égal au quart du temps de combustion du chargement principal.

4. Procédé selon l'une quelconque des revendications 1 à 3, **caractérisé en ce que** lorsque le chargement pyrotechnique principal (23) et la pellicule pyrotechnique (24) sont constitués de compositions composites qui comprennent un liant et une charge énergétique, le liant est le même pour ledit chargement pyrotechnique (23) et pour ladite pellicule pyrotechnique (24).

5. Procédé selon l'une quelconque des revendications précédentes, **caractérisé en ce que** la vitesse de combustion linéaire $V_2$ de la pellicule pyrotechnique (24) satisfait, sous pression de 20 MPa, à la relation :

   $$0{,}1\ V_1 \leq V_2 \leq 0{,}5\ V_1$$

   $V_1$ étant la vitesse de combustion linéaire, sous une pression de 20 MPa, du chargement principal.

6. Procédé selon l'une quelconque des revendications 1 à 5, **caractérisé en ce qu'**on utilise un générateur pyrotechnique (2) constitué d'un corps cylindrique creux en forme de boîtier, comprenant une paroi latérale (4) et une face plane (5), et qui est fermé par une bague de fermeture (6) traversée par un dispositif d'allumage central qui pénètre à l'intérieur dudit boîtier et qui est entouré par ledit chargement pyrotechnique en forme de bloc annulaire (9) maintenu par des systèmes de calage (13, 14) perméables aux gaz, la paroi latérale dudit générateur présentant des orifices (15) de sortie des gaz qui sont obturés par une enveloppe métallique fine (16) en cuivre interne audit boîtier.

7. Chargement pyrotechnique (9) à double composition utilisé dans la mise en oeuvre du procédé selon la revendication 1, constitué à partir d'un chargement pyrotechnique principal (23) enrobé ayant une vitesse de combustion linéaire $V_1$ au moins égale à 25 mm/s, sous une pression de 20 Mpa, **caractérisé en ce que** au moins une partie de la surface de ce chargement principal (23) est recouverte par. une pellicule (24) de composition pyrotechnique, déposée par pulvérisation ou par trempage, adhérant audit chargement principal par simple dépôt et présentant une vitesse de combustion linéaire $V_2$ satisfaisant sous une pression de 20 MPa à la relation :

   $$0{,}05\ V_1 \leq V_2 \leq 0{,}5\ V_1$$

   ledit chargement pyrotechnique principal (23) et ladite pellicule externe (24) de composition pyrotechnique étant constitués de compositions pyrotechniques à base de nitrocellulose ou de compositions pyrotechniques composites principalement constituées par un liant et par une charge énergétique.

**8.** Chargement selon la revendication 7, **caractérisé en ce que** le chargement pyrotechnique principal est sous forme de pastilles.

**9.** Chargement selon la revendication 7, **caractérisé en ce que** le chargement pyrotechnique principal (23) est sous forme de bloc annulaire présentant au moins un canal central (10).

**10.** Chargement selon la revendication 9, **caractérisé en ce que** seule la surface latérale externe dudit bloc annulaire est recouverte par une pellicule pyrotechnique (24).

**Patentansprüche**

**1.** Herstellungsverfahren für eine Vorrichtung, die es gestattet, in progressiver Weise ein Schutzkissen (1) für Kraftfahrzeuginsassen aufzublasen, wobei diese Vorrichtung im wesentlichen durch das Kissen gebildet wird, das in Verbindung mit einem pyrotechnischen Generator (2) für Gas steht, das wenigstens teilweise aus der Verbrennung einer festen pyrotechnischen Ladung (9) mit zweifacher Zusammensetzung kommt, die im Inneren des Generators angeordnet ist und deren Verbrennung durch eine mit einem Crash-Sensor gekoppelte Zündvorrichtung (8) eingeleitet werden kann, **dadurch gekennzeichnet, daß**:

i) eine feste pyrotechnische Ladung (9) verwendet wird, die aus einer pyrotechnischen Hauptladung (23) gebildet ist, die eine lineare Verbrennungsgeschwindigkeit $V_1$ von wenigstens 25 mm/s unter einem Druck von 20 MPa aufweist und deren Oberfläche wenigstens teilweise durch Pulverisieren oder Eintauchen mit einem äußeren Film (24) aus einer pyrotechnischen Zusammensetzung, der an der Hauptladung durch einfache Anlagerung anhaftet, bedeckt wird, wobei dieser Film eine lineare Verbrennungsgeschwindigkeit $V_2$ aufweist, die unter einem Druck von 20 MPa der folgenden Bedingung genügt:

$$0,05\ V_1 \leq V_2 \leq 0,5\ V_1$$

wobei die pyrotechnische Hauptladung (23) und der äußere Film (24) aus der pyrotechnischen Zusammensetzung gebildet sind aus pyrotechnischen Zusammensetzungen auf der Basis von Nitrocellulose oder zusammengesetzten pyrotechnischen Zusammensetzungen, die im wesentlichen aus einem Bindemittel und einer energetischen Ladung gebildet sind, ii) die Ladung mit zweifacher Zusammensetzung im Inneren des Generators in der Weise angeordnet wird, daß die gesamte derart bedeckte Oberfläche der Hauptladung als Oberfläche zur Einleitung von deren Verbrennung dient, wenn die Zündvorrichtung durch den Crash-Sensor ausgelöst wird.

**2.** Verfahren nach Anspruch 1, **dadurch gekennzeichnet, daß** die pyrotechnische Hauptladung (23) die Form eines ringförmigen Blocks hat, der wenigstens einen zentralen Kanal (10) aufweist.

**3.** Verfahren nach Anspruch 1, **dadurch gekennzeichnet, daß** die Dicke des äußeren Films (24) so eingestellt ist, daß seine Verbrennungszeit höchstens gleich einem Viertel der Verbrennungszeit der Hauptladung ist.

**4.** Verfahren nach einem beliebigen der Ansprüche 1 bis 3, **dadurch gekennzeichnet, daß** wenn die pyrotechnische Hauptladung (23) und der pyrotechnische Film (24) aus zusammengesetzten Zusammensetzungen bestehen, die ein Bindemittel und eine energetische Ladung umfassen, das Bindemittel für die pyrotechnische Ladung (23) und für den pyrotechnischen Film (24) dasselbe ist.

**5.** Verfahren nach einem beliebigen der vorhergehenden Ansprüche, **dadurch gekennzeichnet, daß** die lineare Verbrennungsgeschwindigkeit $V_2$ des pyrotechnischen Films (24) unter einem Druck von 20 MPa die folgende Bedingung erfüllt:

$$0,1\ V_1 \leq V_2 \leq 0,5\ V_1$$

wobei $V_1$ die lineare Verbrennungsgeschwindigkeit der Hauptladung unter einem Druck von 20 MPa ist.

**6.** Verfahren nach einem beliebigen der Ansprüche 1 bis 5, **dadurch gekennzeichnet, daß** ein pyrotechnischer Generator (2) verwendet wird, der durch einen hohlen zylindrischen Körper in Form eines Gehäuses gebildet wird, das eine Seitenwand (4) und eine ebene Fläche (5) umfaßt und das durch einen Schließring (6) verschlossen ist, der von einer zentralen Zündvorrichtung durchstoßen wird, die in das Innere des Gehäuses reicht und die von der pyrotechnischen Ladung in Form eines ringförmigen Blocks (9) umgeben ist, der durch Verklemmungssysteme (13, 14) gehalten wird, die für die Gase durchlässig sind, wobei die Seitenwand des Generators Öffnungen (15) zum Austritt der Gase aufweist, die durch eine im Gehäuseinneren angeordnete feine metallische Hülle (16) aus Kupfer verschlossen sind.

**7.** Pyrotechnische Ladung (9) mit zweifacher Zusammensetzung, die bei der Ausführung des Verfahrens nach Anspruch 1 verwendet wird, die auf der Basis einer umhüllten pyrotechnischen Hauptladung (23) mit einer linearen Verbrennungsgeschwindigkeit $V_1$ von wenigstens 25 mm/s unter einem Druck von 20 MPa gebildet ist, **dadurch gekennzeichnet, daß** wenigstens ein Teil der Oberfläche dieser Hauptladung (23) mit einem äußeren Film (24) aus einer pyrotechnischen Zusammensetzung bedeckt ist, der durch Pulverisieren oder Eintauchen aufgebracht ist, der an der Hauptladung durch einfache Anlagerung anhaftet und der eine lineare Verbrennungsgeschwindigkeit $V_2$ aufweist, die unter einem Druck von 20 MPa der folgenden Bedingung genügt:

$$0{,}05\ V_1 \leq V_2 \leq 0{,}5\ V_1$$

wobei die pyrotechnische Hauptladung (23) und der äußere Film (24) aus der pyrotechnischen Zusammensetzung gebildet sind aus pyrotechnischen Zusammensetzungen auf der Basis von Nitrocellulose oder zusammengesetzten pyrotechnischen Zusammensetzungen, die im wesentlichen aus einem Bindemittel und einer energetischen Ladung gebildet sind.

8. Ladung nach Anspruch 7, **dadurch gekennzeichnet, daß** die pyrotechnische Hauptladung (23) in Form von Tabletten vorliegt.

9. Ladung nach Anspruch 7, **dadurch gekennzeichnet, daß** die pyrotechnische Hauptladung (23) in Form eines ringförmigen Blocks vorliegt, der wenigstens einen zentralen Kanal (10) aufweist.

10. Ladung nach Anspruch 9, **dadurch gekennzeichnet, daß** nur die äußere Seitenfläche des ringförmigen Blocks mit einem pyrotechnischen Film (24) bedeckt ist.

**Claims**

1. Process of fabricating a device allowing an airbag (1) for protecting an occupant of a motor vehicle to be inflated in a gradual manner, this device consisting mainly of the said airbag connected to a pyrotechnic generator (2) of gases arising at least partially from the combustion of a solid double-composition pyrotechnic charge (9) placed inside the said generator, the combustion of which charge may be initiated by an igniter (8) coupled to a collision detector, **characterized in that**:

(i) a solid pyrotechnic charge (9) is used which consists of a main pyrotechnic charge (23) having a linear burning rate $V_1$ at least equal to 25 mm/s under a pressure of 20 MPa and the surface of which is at least partially covered, by spraying or by dip-coating, with an external skin (24) of pyrotechnic composition adhering to the said main charge by simple deposition, this skin having a linear burning rate $V_2$ which satisfies, under a pressure of 20 MPa, the relationship:

$$0.05\ V_1 \leq V_2 \leq 0.5\ V_1\ ;$$

pyrotechnic nitrocellulose-based compositions or composite pyrotechnic compositions mainly consisting of a binder and of a powerful charge being used to constitute the said main pyrotechnic charge (23) and the said external skin (24) of pyrotechnic composition;
(ii) the said double-composition charge is placed inside the said generator so that the entire surface of the main charge thus covered serves as the combustion initiation surface of the latter when the said igniter is actuated by the collision detector.

2. Process according to claim 1, **characterized in that** the main pyrotechnic charge (23) is in the form of an annular block having at least one central channel (10).

3. Process according to claim 1, **characterized in that** the thickness of the external skin (24) is set so that its combustion time is at most equal to one-quarter of the combustion time of the main charge.

4. Process according to anyone of claims 1 to 3, **characterized in that** when composite compositions comprising a binder and a powerful charge are used to constitute the said main pyrotechnic charge (23) and the said external skin (24), the binder is the same for said pyrotechnic charge (23) and for the said pyrotechnic skin (24).

5. Process according to any preceding claims, **characterized in that** that the linear burning rate $V_2$ of the pyrotechnic skin (24) satisfies, under a pressure of 20 MPa, the relationship:

$$0{,}1\ V_1 \leq V_2 \leq 0.5\ V_1$$

$V_1$ being the linear burning rate, under a pressure of 20 MPa, of the main charge.

6. Process according to anyone of claims 1 to 5, **characterized in that** a pyrotechnic generator (2) is used which consists of a hollow cylindrical body in the form of a can, comprising a side wall (4) and a plane face (5) and closed by a closure ring (6) through which a central ignition device (8) passes, this ignition device entering the said can and being surrounded by said pyrotechnic charge in the form of an annular block (9) held in place by wedging systems (13, 14) permeable to the gases, the side wall of the said generator having gas outlet orifices (15) which are blocked off by a thin metal shell (16) of copper internal to the said can.

7. A pyrotechnic double-composition charge (9) used for implementation of the process according to claim 1, this charge comprising an encapsulated main pyrotechnic charge (23) having a linear burning rate $V_1$ at least equal to 25 mm/s, under a pressure of 20 MPa, **characterized in that** at least part of the surface of said main charge (23) is covered with an external skin (24) of pyrotechnic composition, deposited by spraying or dip-coating, adhering to the said main charge by simple deposition, said skin having a linear burning rate $V_2$ which satisfies, under a pressure of 20 MPa, the relationship:

$$0.05 \, V_1 \leq V_2 \leq 0.5 \, V_1$$

pyrotechnic nitrocellulose-based compositions or composite pyrotechnic compositions mainly consisting of a binder and of a powerful charge being used to constitute the said main pyrotechnic charge (23) and the said external skin (24) of pyrotechnic composition.

8. A charge according to claim 7, **characterized in that** a charge in the form of discs is used as the main pyrotechnic charge (23).

9. A charge according to claim 7, **characterized in that** a charge in the form of an annular block having at least one central channel (10) is used as the main pyrotechnic charge (23).

10. A charge according to claim 9, **characterized in that** only the external lateral surface of the said annular block is covered with a pyrotechnic skin (24).

FIG.1

FIG.2

FIG.3

# FIG.4